# EUROPÄISCHE PATENTSCHRIFT

(11) **EP 2 612 052 B1**
(45) Veröffentlichungstag und Bekanntmachung des Hinweises auf die Patenterteilung: **01.06.2016**
(21) Anmeldenummer: 11764695.0
(22) Anmeldetag: 02.09.2011
(51) Int. Cl.: F16F 7/10, F16F 7/104

(54) **SCHWINGUNGSTILGER MIT VARIABLER TILGEREIGENFREQUENZ**
VIBRATION ABSORBER WITH VARIABLE ABSORBER NATURAL FREQUENCY
AMORTISSEUR DE VIBRATIONS À FRÉQUENCE PROPRE D'AMORTISSEMENT VARIABLE

(30) Priorität: 02.09.2010 DE 102010040175
(43) Veröffentlichungstag der Anmeldung: 10.07.2013
(73) Patentinhaber: B.E.C. Breitbach Engineering Consulting GmbH, 37075 Göttingen (DE)
(72) Erfinder: BREITBACH, Elmar, 37075 Göttingen (DE)
(74) Vertreter: REHBERG HÜPPE + PARTNER
(86) Internationale Anmeldenummer: PCT/EP2011/065178
(87) Internationale Veröffentlichungsnummer: WO 2012/028708

(56) Entgegenhaltungen:
- EP-A1- 0 067 548
- JP-A- 58 211 048
- JP-A- 59 019 834
- JP-A- 61 021 443
- JP-A- 62 155 348
- JP-A- 63 243 544
- US-A- 2 599 539
- US-A- 4 935 651

## Beschreibung

### TECHNISCHES GEBIET DER ERFINDUNG

Die Erfindung bezieht sich auf einen Schwingungstilger mit einer Basis zum Ankoppeln an eine Struktur, deren Schwingungen in Richtung einer ortsfesten Tilgerwirkachse zu tilgen sind, mit mehreren in Richtung der Tilgerwirkachse pendelnd gelagerten Tilgermassen und mit einem Motor zum Einstellen einer Tilgereigenfrequenz in Richtung der Tilgerwirkachse.

Schwingungstilger sind ein ideales Mittel, um unerwünschte Schwingungen einer Struktur zu tilgen, d. h. abzumindern und zukünftig zu unterdrücken. Schwingungstilger weisen jedoch nur bei ihrer Tilgereigenfrequenz die gewünschte Wirkung auf. Die Tilgereigenfrequenz ist daher auf die Frequenz der zu unterdrückenden Schwingungen, d. h. z. B. auf eine Eigenfrequenz der jeweiligen Struktur oder auf eine Frequenz von Anregungen der Struktur abzustimmen. Vielfach ist die Frequenz, bei der die unerwünschten Schwingungen der Struktur auftreten, jedoch nicht fest, sondern variiert durch unterschiedliche Betriebszustände der Struktur oder mit der Frequenz von Anregungen der Struktur, beispielsweise durch einen Verbrennungsmotor, der mit variabler Drehzahl betrieben wird.

Die vorliegende Erfindung fällt auf das Gebiet der Schwingungstilger, deren Tilgereigenfrequenz an eine sich verändernde Eigenfrequenz einer Struktur oder eine sich ändernde Frequenz von Anregungen der Struktur anpassen lässt. Konkret ist hierzu bei der vorliegenden Erfindung ein Motor vorgesehen.

### STAND DER TECHNIK

Bei Schwingungstilgern mit pendelnd aufgehängten Tilgermassen ist es grundsätzlich bekannt, die effektive Menge des durch die Tilgermasse ausgebildeten Pendels und damit die Tilgereigenfrequenz durch Verlagern der Tilgermasse oder einer Hilfsmasse mit Hilfe eines Motors zu verändern.

Beispielsweise aus der DE 43 40 293 A1 ist ein Drehschwingungstilger für eine um eine Achse rotierende Welle bekannt, der ein mit der Welle verbundenes Nabenteil umfasst, wobei an dem Nabenteil zumindest zwei um Schwenkachsen in Umfangsrichtung verschwenkbare Trägheitsmassen festgehalten sind. Die Tilgereigenfrequenz dieses Drehschwingungstilgers, bei dem die Trägheitsmassen als Tilgermassen im Fliehkraftfeld der Drehbewegung der rotierenden Welle pendeln, steigt proportional mit der Drehzahl der Welle an. D. h, wenn der bekannte Drehschwingungstilger beispielsweise auf eine Tilgereigenfrequenz abgestimmt ist, die der doppelten Drehzahl der Welle entspricht, behält er diese Abstimmung mit der sich ändernden Drehzahl der Welle bei. Bei dem bekannten Drehschwingungstilger ist für jede Trägheitsmasse zumindest eine Feder zur statischen Lagebestimmung vorgesehen. Der bekannte Drehschwingungstilger ist gut geeignet für die Abminderung von Drehschwingungen einer für seine Anbringung zugänglichen Welle, wenn diese Drehschwingungen eine höhere Frequenz als die Drehzahl der Welle selbst aufweisen. Bei zu steifer Ausbildung der Federn zur statischen Lagebestimmung der Trägheitsmassen besteht jedoch die Gefahr, dass die gewünschte Proportionalität zwischen der Drehzahl der Welle und der Tilgereigenfrequenz gestört wird. Vielfach ist zudem eine störende Drehschwingungen aufweisende Welle nicht zugänglich oder sogar gar nicht vorhanden, oder die störenden Drehschwingungen weisen eine Frequenz auf, die kleiner oder gleich der Drehzahl der Welle ist.

Zur Verbesserung der Laufruhe von Brennkraftmaschinen von kleinen Benzinverbrennungsmotoren für Handwerkzeuge bis zu großen Schiffdieselaggregaten ist es bekannt, Ausgleichswellen vorzusehen, die in einem festen Drehzahlverhältnis zu der Kurbelwelle der Brennkraftmaschine rotieren und aus dem Verbrennungsprozess resultierende Momente, die über die Kurbelwelle auf das jeweilige Motorgehäuse einwirken, durch Momente von Schwungmassen kompensieren. Der mechanische Aufwand für die Lagerung und den Antrieb der Ausgleichswellen und die Masse der Ausgleichswellen wachsen mit der Größe der jeweiligen Brennkraftmaschine an und nehmen bei größeren Aggregaten ganz erhebliche absolute Ausmaße an. Ein Schwingungsdämpfer mit den Merkmalen des Oberbegriffs des unabhängigen Patentanspruchs 1 ist aus der US 2,599,539 bekannt.

Aus der DE 196 41 763 A1 ist ein Schwingungstilger bekannt, bei der Tilgermassen über eine symmetrische Blattfederanordnung an einer Basis gelagert sind. Dabei ist die Tilgereigenfrequenz dieses bekannten Schwingungstilgers durch Beaufschlagung der Blattfederanordnung im Bereich ihrer Einspannstelle an der Basis veränderbar.

Aus der JP 58-211048 A ist ein elektrischer Schwingungskompensator zum Minimieren von Schwingungen eines Schiffskörpers bekannt. Der Schwingungskompensator weist ein Schwungrad mit einstellbaren unsymmetrischen Massen auf. Ein Schwingungssensor in einem Unterkunftsraum des Schiffes erfasst die Amplitude von Schwingungen des Schiffskörpers, und ein Schwingungsanregungskrafteinsteller liefert ein Signal zum Minimieren der Amplitude des Schiffskörpers in Abhängigkeit von der erfassten Amplitude. In der Folge wird eine Menge von Stahlkugeln in einem Stahlkugelbehälter in dem Schwungrad des Schwingungskompensators zum automatischen Einstellen der Schwingungsanregungskraft des Schwingungskompensators optimiert.

### AUFGABE DER ERFINDUNG

Der Erfindung liegt die Aufgabe zugrunde, einen Schwingungstilger mit variabler Tilgereigenfrequenz aufzuzeigen, mit dem ein vorhandener Bauraum maximal ausgenutzt wird.

### LÖSUNG

Die Aufgabe der Erfindung wird durch einen Schwingungstilger mit den Merkmalen des unabhängigen Patentanspruchs 1 gelöst. Bevorzugte Ausführungsformen des neuen Schwingungstilgers sind in den abhängigen Ansprüchen 2 bis 14 definiert.

### BESCHREIBUNG DER ERFINDUNG

Bei dem neuen Schwingungstilger mit einer Basis zum Ankoppeln an eine Struktur, deren Schwingungen in Richtung einer ortsfesten Tilgerachse zu tilgen sind, mit mehreren in Richtung der Tilgerachse pendelnd gelagerten Tilgermassen und mit einem Motor zum Einstellen einer Tilgereigenfrequenz in Richtung der Tilgerwirkachse, wobei die Tilgermassen an einer Nabe pendeln gelagert sind, die um die Tilgerachse drehbar, aber in Richtung der Tilgerwirkachse ortsfest an der Basis gelagert ist, und wobei der Motor die Nabe gegenüber der Basis um die Tilgerwirkachse mit unterschiedlichen Drehzahlen in Rotation versetzt, um unterschiedliche Tilgereigenfrequenzen in Richtung der Tilgerachse einzustellen, sind ein Sensor, der eine Amplitude der Pendelbewegung der Tilgermassen in Richtung der Tilgerwirkachse erfasst, und eine Steuerung für den Motor vorgesehen, die die Drehzahl der Nabe fortlaufend in Abhängigkeit von der Amplitude der Pendelbewegung der Tilgermassen einstellt.

Bei dem neuen Schwingungstilger rotieren die Tilgermassen um die Tilgerwirkachse. Sie sind aber nicht in Umfangsrichtung um die Tilgerwirkachse pendeln gelagert, sondern senkrecht dazu in Richtung der Tilgerwirkachse, d. h. parallel zu der Tilgerwirkachse. Die bei der Pendelbewegung auf die Tilgermassen einwirkenden Rückstellkräfte werden bei dem neuen Schwingungstilger im Wesentlichen durch das Fliehkraftfeld der Drehbewegung um die Tilgerwirkachse hervorgerufen. Um asymmetrische Einflüsse des Schwerkraftfelds der Erde auf die Tilgermassen auszuschließen, kann die Tilgerwirkachse vertikal ausgerichtet werden. Ab einer gewissen Drehzahl der Nabe mit den Tilgermassen um die Tilgerwirkachse sind aber auch dann keine relevanten Effekte der Erdanziehungskraft zu bemerken, wenn die Tilgerwirkachse des neuen Schwingungstilgers horizontal ausgerichtet ist. Die Größe der Rückstellkräfte auf die einzelnen Tilgermassen bei deren Pendelbewegung kann durch die Drehzahl, mit der die Nabe in Rotation versetzt wird, in sehr weiten Bereichen eingestellt werden. Damit ist auch die Eigenfrequenz der Pendelbewegung der einzelnen Tilgermassen, die identisch mit der Tilgereigenfrequenz des neuen Schwingungstilgers ist, in weiten Bereichen einstellbar. Die von den Tilgermassen des neuen Schwingungstilgers auf die an die ruhig zu haltende Struktur anzubindende Basis übertragenden Gegenkräfte zu den Schwingungen der Struktur verlaufen in Richtung der gemeinsamen Pendelbewegung der Tilgermassen, d. h. in Richtung der Tilgerwirkachse und damit senkrecht zu der Drehbewegung der Tilgermassen um die Tilgerwirkachse, d. h., es ist systembedingt eine weitgehende Entkopplung zwischen der Drehbewegung und den von dem neuen Schwingungstilger aufgebrachten Gegenkräften zu Schwingungen der ruhig zu haltenden Struktur gegeben. Der Motor für den Antrieb der Nabe mit den Tilgermassen kann entsprechend von minimaler Leistung sein.

Der neue Schwingungstilger weist den Sensor für die Auslenkung mindestens einer der Tilgermassen in Richtung der Tilgerwirkachse und die Steuerung für den Motor auf, wobei die Motorsteuerung die Drehzahl der Nabe fortlaufend so einstellt, dass die Amplitude der Pendelbewegung der mindestens einen Tilgermasse optimiert wird. Dies bedeutet vorzugsweise, dass diese Amplitude maximiert wird. Wenn die absolute maximale Amplitude der Pendelbewegung erreicht wird, ist die Tilgereigenfrequenz des Schwingungstilgers genau auf die Erregerfrequenz abgestimmt. Häufig gibt es aber Grenzen für die zulässige Auslenkung der Tilgermassen insbesondere durch Anschläge an andere Teile des Schwingungstilgers, wie beispielsweise ein Gehäuse, oder durch eine maximal zulässige Verformung eines elastischen Teils der Schwingungstilgers. Dann ist die Steuerung dazu vorgesehen, diese Grenzen maximal auszuschöpfen, d. h. innerhalb dieser Grenzen eine maximale Schwingungsdämpfung bereitzustellen, aber nicht darüber hinaus zu gehen. Dies bedeutet, dass die Tilgereigenfrequenz immer um ein gewisses Maß neben der Erregerfrequenz gehalten wird. Die erforderliche Begrenzung der Amplitude der Auslenkung der Tigermassen wird also nicht durch deren Dämpfung, sondern durch eine begrenzte Verstimmung der Tigereigenfrequenz erreicht, die auch wieder zurückgenommen werden kann, wenn bspw. die Erregung der zu bedämpfenden Schwingungen zurück geht.

Die Verfolgung der maximalen Amplitude der Pendelbewegung der Tilgermasse kann nach einem aus verschiedenen Bereichen der Technik bekannten Tracking-Verfahren durchgeführt werden.

Der neue Schwingungstilger ist regelmäßig nicht dazu vorgesehen, an einem Antriebstrang ausgebildet zu werden, wobei die Nabe auf einer Welle angeordnet ist, die von dem Motordrehmoment zu einer weiteren Einrichtung überträgt. Vielmehr ist es in aller Regel so, dass ein von dem Motor zu der Nabe führender Antriebstrang ausschließlich die Nabe antreibt. Vielfach ist es sogar so, dass der Motor bei dem neuen Schwingungstilger ausschließlich zum Antreiben der Nabe vorgesehen ist. D. h. es handelt sich nicht um einen Motor, mit dem mechanische Arbeit bereitgestellt wird, sondern ausschließlich um einen Motor des Tilgers, der die Nabe mit den Tilgermassen gegenüber der Basis und die Tilgerwirkachse auf eine bestimmte Drehzahl bringt und dann auf dieser Drehzahl hält.

Bei dem neuen Schwingungstilger können die Tilgermassen jeweils über einen Federarm an der Nabe gelagert sein, wobei sich der Federarm in einer Grundstellung radial zu der Tilgerwirkachse erstreckt, d. h. längs des Gradienten des Fliehkraftfelds um die Tilgerwirkachse. Dabei kann jeder Federarm eine Blattfeder aufweisen, die die Pendelbewegung der jeweiligen Tilgermasse auf Richtungen senkrecht zu der Umfangsrichtung um die Tilgerwirksachse beschränkt.

Alternativ zu einer Lagerung der Tilgermassen über Federarme können diese auch über starre Pendelarme und Gelenke an der Nabe gelagert sein. In diesem Fall erstreckt sich die Schwenkachse der Gelenke jeweils tangential zu einem Kreisbogen um die Tilgerwirkachse, um die Pendelbewegung der zugehörigen Tilgermasse auf Richtungen senkrecht zu der Umfangsrichtung um die Tilgerwirkachse zu beschränken.

Um die mit einer Pendelbewegung über kleine Winkel verbundene extreme Belastung von Kugellagern, Gleitlagern und anderen Schwenklagern für starre Pendelarme bei dem neuen Schwingungstilger zu vermeiden, kann jedes Gelenk für einen Pendelarm ein Festkörpergelenk sein. Sowohl die mit der Steifigkeit solcher Festkörpergelenke als auch die mit der Steifigkeit von Federarmen als Lagerung für die Tilgermassen verbundenen Einflüsse auf die Rückstellkräfte der Tilgermassen im Fliehkraftfeld um die Tilgerwirkachse und damit auf die Tilgereigenfrequenz können bei dem neuen Schwingungstilger leicht durch eine Variation der Drehzahl der Nabe kompensiert werden.

Vorzugsweise sind die Tilgermassen des neuen Schwingungstilgers in einer rotationssymmetrischen Anordnung um die Tilgerwirkachse angeordnet. Dabei sind besonders bevorzugt drei oder sechs Tilgermassen vorgesehen. Günstig ist es in jedem Fall, wenn die Anzahl der Tilgermassen mindestens drei beträgt.

Bei dem neuen Schwingungstilger können jeweils auch mehrere Tilgermassen für verschiedene in einem vorgegebenen Verhältnis zueinander stehende Tilgereigenfrequenzen vorgesehen sein, beispielsweise für eine erste Frequenz und eine doppelt so hohe zweite Frequenz, d. h. die erste Harmonische der ersten Frequenz.

Bei dem neuen Schwingungstilger kann die Nabe, an der die Tilgermassen gelagert sind, starr mit einem Rotor des Motors verbunden sein. Wenn eine betriebliche Verbindung mit dem Rotor des Motors und der Nabe ausgebildet wird, ist es jedoch sinnvoll, die Nabe über ein elastisches Element mit dem Rotor des Motors zu verbinden. Sonst besteht die Gefahr, dass die mit den Auslenkungen der Tilgermassen bei ihren Pendelbewegungen verbundenen Abstandsänderungen zu der Tilgerwirkachse aufgrund der Drehimpulserhaltung zu periodischen Beschleunigungen und Abbremsungen der Nabe führen, die zu einem Klappern des Getriebes führen können. Das elastische Element ist vorgesehen, die derart hervorgerufenen kleinen Geschwindigkeitsschwankungen der Nabe zu kompensieren.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: skizziert eine elastische Struktur, die durch Schwingungen angeregt wird und deren Schwingungen durch einen Schwingungstilger unabhängig von der Frequenz ihrer Anregung getilgt werden.
- **Fig. 2**: zeigt den Schwingungstilger gemäß Fig. 1 in separater vergrößerter Darstellung.
- **Fig. 3**: zeigt den Schwingungstilger gemäß Fig. 1 in einer axialen Draufsicht längs seiner Tilgerwirkachse.
- **Fig. 4**: skizziert eine andere Ausführungsform des Schwingungstilgers mit variabler Tilgers mit variabler Tilgereigenfrequenz; und
- **Fig. 5**: ist ein Flussdiagramm zur Erläuterung der Art und Weise der Einstellung der Tilgereigenfrequenz des neuen Schwingungstilgers.

### FIGURENBESCHREIBUNG

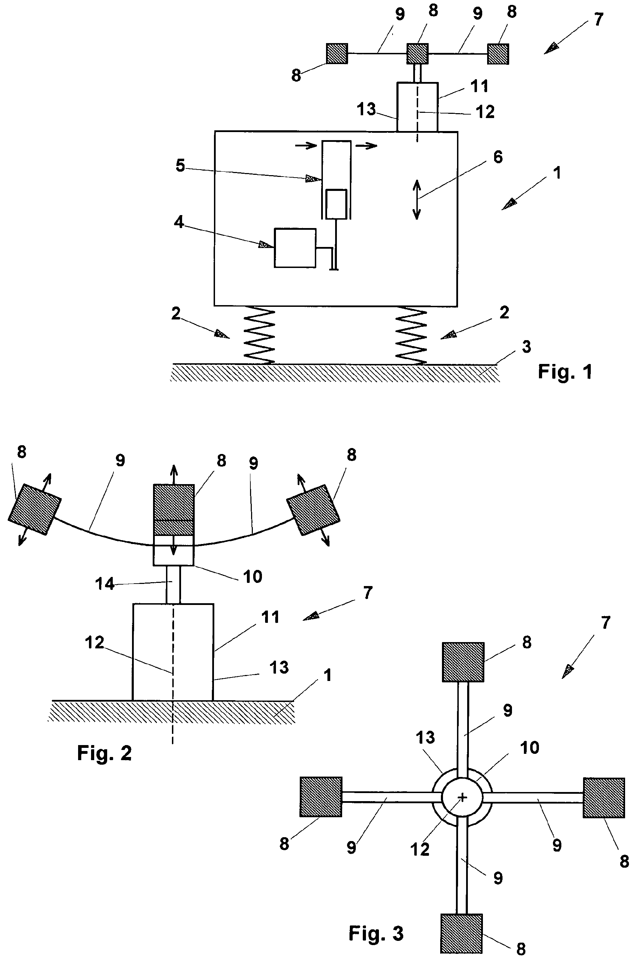

In **Fig. 1** ist eine elastische Struktur 1 dargestellt. Die Elastizität der Struktur 1 ist durch Federn 2 angedeutet, über die die Struktur 1 an einen massiven Untergrund 3 gekoppelt ist. Die

Struktur 1 umfasst hier einen Antrieb 4 für einen Hubkolbenpumpe 5 als Beispiel für einen Erreger von Schwingungen 6 der Struktur 1. Dabei ist die Frequenz, mit der die Schwingungen 6 angeregt werden, von einer variablen Drehzahl des Antriebs 4 der Hubkolbengruppe 5 abhängig. Um die Schwingungen 6 dennoch mit einem Schwingungstilger 7 zu tilgen bzw. die Struktur 1 trotz der Anregung der Schwingungen 6 in Ruhe zu halten, ist der Schwingungstilger 7 bezüglich seiner Tilgereigenfrequenz einstellbar ausgebildet.

Bei dem in den **Fig. 2 und 3** separat und vergrößert dargestellten Schwingungstilger 7 sind Tilgermassen 8 über Blattfedern 9 pendelnd an einer Nabe 10 gelagert, die von einem Motor 11 um eine Tilgerwirkachse 12 in Rotation versetzt wird. Dabei ist die Nabe 10 gegenüber einer Basis 13 des Schwingungstilgers 7, bei der es sich hier um den Stator des Motors 11 handelt, um die Tilgerwirkachse 12 drehbar, aber in Richtung der Tilgerwirkachse 12 ortsfest gelagert. Durch die Rotation der Nabe 10 um die Tilgerwirkachse 12 bildet sich ein Fliehkraftfeld aus, das die wesentlichen Rückstellkräfte auf die Tilgermassen 8 bei ihrer Pendelbewegung relativ zu der Nabe 10 ausübt. Anders gesagt sind die auftretenden Fliehkräfte die wesentlichen Rückstellkräfte auf die Tilgermassen 8 in ihre in Fig. 1 und 3 dargestellte Grundstellung, in der sich die Blattfedern 9 radial von der Tilgerwirkachse 12 weg erstrecken. Fig. 2 zeigt eine ausgelenkte Stellung der Tilgermassen 8, in der alle Tilgermassen 8 eine gleichsinnige Auslenkung längs der Tilgerwirkachse 12 aufweisen. Die mögliche Pendelbewegung der Tilgermassen 8 relativ zu der Nabe 10 ist durch die Ausrichtung der Blattfedern 9 auf Bewegungen senkrecht zu der Umlaufrichtung der Tilgermassen 8 mit der Nabe 10 um die Tilgerwirkachse 12 beschränkt. Diese Richtungen werden hier auch als parallel zu der Tilgerwirkachse 12 oder in Richtung der Tilgerwirkachse 12 bezeichnet. Da die Fliehkräfte auf die Tilgermassen 8 proportional mit der Drehzahl der Nabe 10 um die Tilgerwirkachse 12 ansteigen, kann durch die Einstellung der Drehzahl der Nabe 10 mit dem Motor 11 die Tilgereigenfrequenz des Schwingungstilgers 7 in Richtung der Tilgerwirkachse 12 eingestellt werden, die identisch mit den Eigenfrequenzen der einzelnen Tilgermassen 8 bei ihrer Pendelbewegung relativ zu der Nabe 10 ist. Indem diese Drehzahl mit dem Motor 11 an die Drehzahl des Antriebs 4 fortlaufend angepasst wird, wird der Schwingungsfilger 7 immer auf die Frequenz der Erregung der Struktur 1 zu den Schwingungen 6 durch den Antrieb 4 und die Hubkolbenpumpe 5 abgestimmt.

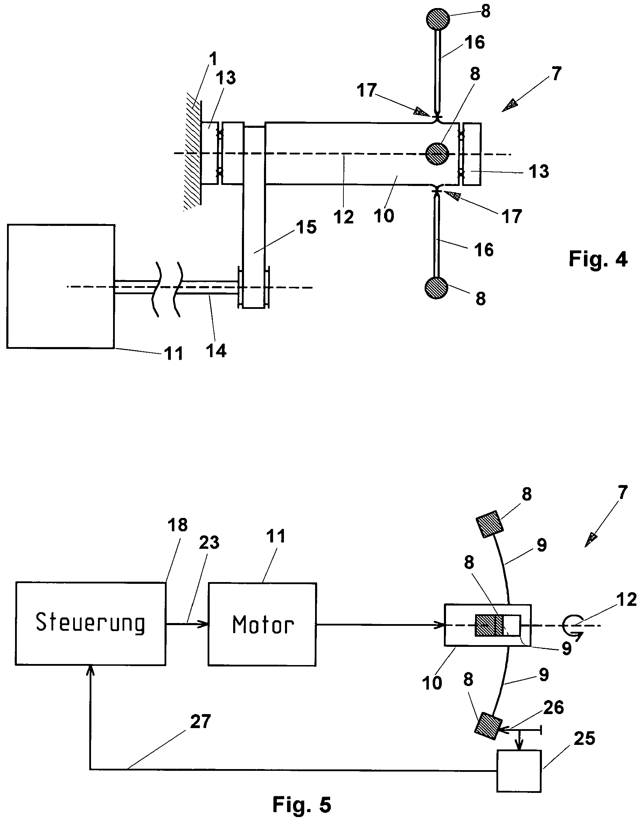

Bei der Ausführungsform des Schwingungstilgers 7 gemäß Fig. 4 ist die Nabe 10 nicht starr mit dem Rotor 14 des Motors 11 verbunden, sondern über einen elastischen Antriebsriemen 15. Entsprechend ist eine separate Basis 13 an die Struktur 1 angekoppelt, an der die Nabe 10 um die Tilgerwirkachse 12 drehbar gelagert ist. Zudem sind die Tilgermassen 8 hier an starren Pendelarmen 16 vorgesehen, die über Festkörpergelenke 17 an der Nabe 10 gelagert sind. Auch die Festkörpergelenke 17 erlauben den Tilgermassen 8 ausschließlich eine Auslenkung gegenüber der Nabe 10 in Richtung der Tilgerwirkachse 12. Die grundsätzliche Funktion des Schwingungstilgers 7 gemäß Fig. 4 entspricht derjenigen des Schwingungstilgers 7 gemäß den Fig. 1 bis 3.

Die in **Fig. 5** skizzierte Art und Weise der Ansteuerung des Motors 11 basiert darauf, dass der Steuerung 18 von einem Sensor 25, der die Auslenkung 26 mindestens einer Tilgermasse 8 relativ zu der Nabe 10 erfasst, eine Amplitude 27 der Pendelbewegung der Tilgermassen 8 mitgeteilt wird. Die Steuerung 18 variiert die angeforderte Drehzahl des Motors 11 über eine Drehzahlanforderung 23 derart, dass diese Amplitude 27 maximiert wird. Das absolute Maximum der Amplitude 27 wird erreicht, wenn die Eigenfrequenz des Schwingungstilgers 7 genau auf die jeweilige Erregerfrequenz abgestimmt ist. Auf diese Weise kann die Erregerfrequenz so mit der Drehzahl des Motors 11 verfolgt werden, dass die Tilgereigenfrequenz des Schwingungstilgers 7 immer gleich der Erregerfrequenz ist. Häufig bestehen aber Grenzen für die maximale Amplitude der Tilgermassen 8, zum Beispiel durch ein die beweglichen Teile des Schwingungstilgers 1 umgebendes Gehäuse (nicht dargestellt). Dann stellt 18 die Steuerung jeweils die innerhalb dieser Grenzen maximal zulässige Amplitude der Tilgermassen 8 ein.

### BEZUGSZEICHENLISTE

- 1: Struktur
- 2: Feder
- 3: Untergrund
- 4: Antrieb
- 5: Hubkolbenpumpe
- 6: Schwingung
- 7: Schwingungstilger
- 8: Tilgermasse
- 9: Blattfeder
- 10: Nabe
- 11: Motor
- 12: Tilgerwirkachse
- 13: Basis
- 14: Rotor
- 15: Antriebsriemen
- 16: Pendelarm
- 17: Festkörpergelenk
- 18: Steuerung

- 23: Drehzahlanforderung

- 25: Sensor
- 26: Auslenkung
- 27: Amplitude

## Patentansprüche

1. Schwingungstilger (7) mit einer Basis (13) zum Ankoppeln an eine Struktur (1), deren Schwingungen (6) in Richtung einer ortsfesten Tilgerwirkachse (12) zu tilgen sind, mit mehreren in Richtung der Tilgerwirkachse (12) pendelnd gelagerten Tilgermassen (8) und mit einem Motor (11) zum Einstellen einer Tilgereigenfrequenz in Richtung der Tilgerwirkachse (12), wobei die Tilgermassen (8) an einer Nabe (10) pendelnd gelagert sind, die um die Tilgerwirkachse (12) drehbar aber in Richtung der Tilgerwirkachse (12) ortsfest an der Basis (13) gelagert ist, wobei der Motor (11) die Nabe (10) gegenüber der Basis (13) um die Tilgerwirkachse (12) mit unterschiedlichen Drehzahlen in Rotation versetzt, um unterschiedliche Tilgereigenfrequenzen in Richtung der Tilgerwirkachse (12) einzustellen, und wobei ein Sensor (25) eine Amplitude der Pendelbewegung der Tilgermassen (8) in Richtung der Tilgerwirkachse (12) erfasst, **gekennzeichnet durch** eine Steuerung (18) für den Motor (11), die die Drehzahl der Nabe (10) fortlaufend in Abhängigkeit von der Amplitude der Pendelbewegung der Tilgermassen (8) einstellt.

2. Schwingungstilger (7) nach Anspruch 1, **dadurch gekennzeichnet, dass** die Steuerung (18) die Drehzahl der Nabe (10) fortlaufend so einstellt, dass die Amplitude (27) der Pendelbewegung der Tilgermassen (8) maximiert wird.

3. Schwingungstilger (7) nach Anspruch 1 oder 2, **dadurch gekennzeichnet, dass** die Steuerung (18) die Drehzahl der Nabe (10) fortlaufend so einstellt, dass die Amplitude (27) der Pendelbewegung der Tilgermassen (8) eine begrenzte Auslenkung der Tilgermassen (8) maximal ausnutzt.

4. Schwingungstilger (7) nach einem der vorhergehenden Ansprüche, **dadurch gekennzeichnet, dass** ein von dem Motor (11) zu der Nabe (10) führender Antriebsstrang ausschließlich die Nabe (10) antreibt.

5. Schwingungstilger (7) nach einem der vorhergehenden Ansprüche, **dadurch gekennzeichnet, dass** der Motor (11) ausschließlich die Nabe (10) antreibt.

6. Schwingungstilger (7) nach einem der vorhergehenden Ansprüche, **dadurch gekennzeichnet, dass** die Tilgermassen (8) jeweils über einen Federarm an der Nabe (10) gelagert sind, wobei sich der Federarm in einer Grundstellung radial zu der Tilgerwirkachse (12) erstreckt.

7. Schwingungstilger (7) nach Anspruch 6, **dadurch gekennzeichnet, dass** jeder Federarm eine Blattfeder (9) aufweist.

8. Schwingungstilger (7) nach einem der vorhergehenden Ansprüche 1 bis 6, **dadurch gekennzeichnet, dass** die Tilgermassen (8) jeweils über einen starren Pendelarm (16) und ein Gelenk an der Nabe (10) gelagert sind, wobei sich eine Schwenkachse des Gelenks tangential zu einem Kreisbogen um die Tilgerwirkachse (12) erstreckt.

9. Schwingungstilger (7) nach Anspruch 8, **dadurch gekennzeichnet, dass** jedes Gelenk ein Festkörpergelenk (17) ist.

10. Schwingungstilger (7) nach einem der vorhergehenden Ansprüche, **dadurch gekennzeichnet, dass** die Pendelbewegung der Tigermassen (8) ungedämpft ist.

11. Schwingungstilger (7) nach einem der vorhergehenden Ansprüche, **dadurch gekennzeichnet, dass** die Tilgermassen (8) in einer rotationssymmetrischen Anordnung um die Tilgerwirkachse (12) angeordnet sind.

12. Schwingungstilger (7) nach einem der vorhergehenden Ansprüche, **dadurch gekennzeichnet, dass** jeweils mehrere Tilgermassen (8) für verschiedene in einem vorgegebenen Verhältnis zueinander stehende Tilgereigenfrequenzen vorgesehen sind.

13. Schwingungstilger (7) nach einem der vorhergehenden Ansprüche, **dadurch gekennzeichnet, dass** die Nabe (10) starr mit einem Rotor (14) des Motors (11) verbunden ist.

14. Schwingungstilger (7) nach einem der vorhergehenden Ansprüche 1 bis 10, **dadurch gekennzeichnet, dass** die Nabe (10) über ein elastisches Element mit einem Rotor (14) des Motors (11) verbunden ist.

## Claims

1. Vibration absorber (7) comprising a basis (13) to be coupled to a structure (1) whose vibrations (6) are to be absorbed in a direction of a spatially fixed absorber activity axis (12), a plurality of absorber masses (8) oscillatingly mounted in the direction of the absorber activity axis (12), and a motor (11) for adjusting an absorber eigenfrequency in the direction of the absorber activity axis (12), wherein the absorber masses (8) are oscillatingly mounted to a hub (10), which is mounted to the basis (13) rotatingly about the absorber activity axis (12) but spatially fixed in the direction of the absorber activity axis (12), wherein the motor (11) rotates the hub (10) with regard to the basis (13) about the absorber activity axis (12) at different numbers of revolutions to adjust different absorber eigenfrequencies in the direction of the absorber activity axis (12), and wherein a sensor (25) monitors an amplitude of the oscillating motion of the absorber masses (8) in the direction of the absorber activity axis (12), **characterised in that** a controller (18) for the motor (11) continuously adjusts the number of revolutions of the hub (10) depending on the amplitude of the oscillating motion of the absorber masses (8).

2. Vibration absorber (7) of claim 1, **characterised in that** the controller (18) continuously adjusts the number of revolutions of the hub (10) in such a way that the amplitude (27) of the oscillating motion of the absorber masses (8) is maximised.

3. Vibration absorber (7) of claim 1 or 2, **characterised in that** the controller (18) continuously adjusts the number of revolutions of the hub (10) in such a way that the amplitude (27) of the oscillating motion of the absorber masses (8) makes maximum use of a limited deviation of the absorber masses (8).

4. Vibration absorber (7) of any of the preceding claims, **characterised in that** a drive train leading from the motor (11) to the hub (10) only drives the hub (10).

5. Vibration absorber (7) of any of the preceding claims, **characterised in that** the motor (11) only drives the hub (10).

6. Vibration absorber (7) of any of the preceding claims, **characterised in that** the absorber masses (8) are each mounted to the hub (10) via a spring arm, wherein the spring arm, in a basic position, radially extends from the absorber activity axis (12).

7. Vibration absorber (7) of claim 6, **characterised in that** each spring arm comprises a leaf spring (9).

8. Vibration absorber (7) of any of the preceding claims 1 to 6, **characterised in that** the absorber masses (8) are each mounted to the hub (10) via a rigid pendulum arm (16) and a hinge, wherein a hinge axis of the hinge extends tangentially with regard to a circular arc around the absorber activity axis (12).

9. Vibration absorber (7) of claim 8, **characterised in that** each hinge is a flexure hinge (17).

10. Vibration absorber (7) of any of the preceding claims, **characterised in that** the oscillating motion of the absorber masses (8) is undamped.

11. Vibration absorber (7) of any of the preceding claims, **characterised in that** the absorber masses (8) are arranged in a rotation-symmetric arrangement around the absorber activity axis (12).

12. Vibration absorber (7) of any of the preceding claims, **characterised in that** a plurality of absorber masses (8) are provided for each of different absorber eigenfrequencies which are in a predetermined proportion to each other.

13. Vibration absorber (7) of any of the preceding claims, **characterised in that** the hub (10) is rigidly connected to a rotor (14) of the motor (11).

14. Vibration absorber (7) of any of the preceding claims 1 to 10, **characterised in that** the hub (10) is connected to a rotor (14) of the motor (11) via an elastic element.

## Revendications

1. Amortisseur de vibrations (7) avec une base (13) pour le couplage à une structure (1), dont les vibrations (6) doivent être amorties en direction d'un axe d'action de l'amortissement (12), avec plusieurs masses d'amortissement (8) logées de manière pendulaire en direction de l'axe d'action de l'amortissement (12) et avec un moteur (11) pour le réglage d'une fréquence propre d'amortissement en direction de l'axe d'action de l'amortissement (12), les masses d'amortissement (8) étant logées de manière pendulaire au niveau d'un moyeu (10), qui est logé de manière rotative autour de l'axe d'action de l'amortissement (12) mais fixe en direction de l'axe d'action de l'amortissement (12) au niveau de la base (13), le moteur (11) mettant le moyeu (10) en rotation par rapport à la base (13) autour de l'axe d'action de l'amortissement (12) avec différentes vitesses de rotation, afin de régler différentes fréquences propres d'amortissement en direction de l'axe d'action de l'amortissement (12), un capteur (25) mesurant une amplitude du mouvement pendulaire des masses d'amortissement (8) en direction de l'axe d'action de l'amortissement (12), **caractérisé par** un dispositif de commande (18) pour le moteur (11), qui règle la vitesse de rotation du moyeu (10) en continu en fonction de l'amplitude du mouvement pendulaire des masses d'amortissement (8).

2. Amortisseur de vibrations (7) selon la revendication 1, **caractérisé en ce que** le dispositif de commande (18) règle la vitesse de rotation du moyeu (10) de manière continue de façon à ce que l'amplitude (27) du mouvement pendulaire des masses d'amortissement (8) soit maximisée.

3. Amortisseur de vibrations (7) selon la revendication 1 ou 2, **caractérisé en ce que** le dispositif de commande (18) règle la vitesse de rotation du moyeu (10) de manière continue de façon à ce que l'amplitude (27) du mouvement pendulaire des masses d'amortissement (8) utilise au maximum une déviation limitée des masses d'amortissement (8).

4. Amortisseur de vibrations (7) selon l'une des revendications précédentes, **caractérisé en ce qu'**une chaîne cinématique s'étendant du moteur (11) au moyeu (10) entraîne exclusivement le moyeu (10).

5. Amortisseur de vibrations (7) selon l'une des revendications précédentes, **caractérisé en ce que** le moteur (11) entraîne exclusivement le moyeu (10).

6. Amortisseur de vibrations (7) selon l'une des revendications précédentes, **caractérisé en ce que** les masses d'amortissement (8) sont logées chacune par l'intermédiaire d'un bras à ressort au niveau du moyeu (10), le bras à ressort s'étendant, dans une position de base, radialement par rapport à l'axe d'action de l'amortissement (12).

7. Amortisseur de vibrations (7) selon la revendication 6, **caractérisé en ce que** chaque bras à ressort comprend un ressort à lames (9).

8. Amortisseur de vibrations (7) selon l'une des revendications 1 à 6, **caractérisé en ce que** les masses d'amortissement (8) sont logées chacune par l'intermédiaire d'un bras pendulaire rigide (16) et une articulation au niveau du moyeu (10), un axe de pivotement de l'articulation s'étendant tangentiellement par rapport à un arc de cercle autour de l'axe d'action de l'amortissement (12).

9. Amortisseur de vibrations (7) selon la revendication 8, **caractérisé en ce que** chaque articulation est une articulation de corps fixe (17).

10. Amortisseur de vibrations (7) selon l'une des revendications précédentes, **caractérisé en ce que** le mouvement pendulaire des masses d'amortissement (8) n'est pas amorti.

11. Amortisseur de vibrations (7) selon l'une des revendications précédentes, **caractérisé en ce que** les masses d'amortissement (8) sont disposées dans une disposition à symétrie de rotation autour de l'axe d'action de l'amortissement (12).

12. Amortisseur de vibrations (7) selon l'une des revendications précédentes, **caractérisé en ce que** plusieurs masses d'amortissement (8) sont prévues pour différentes fréquences propres d'amortissement ayant entre elles un rapport prédéterminé.

13. Amortisseur de vibrations (7) selon l'une des revendications précédentes, **caractérisé en ce que** le moyeu (10) est relié de manière rigide avec un stator (14) du moteur (11).

14. Amortisseur de vibrations (7) selon l'une des revendications précédentes 1 à 10, **caractérisé en ce que** le moyeu (10) est relié, par l'intermédiaire d'un élément élastique, à un rotor (14) du moteur (11).
